Europäisches Patentamt

European Patent Office

Office européen des brevets

(11) Veröffentlichungsnummer: **0 178 308 B1**

(19)

# EUROPÄISCHE PATENTSCHRIFT

(12)

(45) Veröffentlichungstag der Patentschrift: **24.06.92**

(51) Int. Cl.⁵: **C04B 28/02**, //(C04B28/02, 14:42,18:08,18:24)

(21) Anmeldenummer: **85901428.4**

(22) Anmeldetag: **15.03.85**

(86) Internationale Anmeldenummer: **PCT/EP85/00105**

(87) Internationale Veröffentlichungsnummer: **WO 85/04165 (26.09.85 85/21)**

Die Akte enthält technische Angaben, die nach dem Eingang der Anmeldung eingereicht wurden und die nicht in dieser Patentschrift enthalten sind.

(54) **ASBESTFREIE BAUSTOFF-FORMTEILE UND VERFAHREN ZU IHRER HERSTELLUNG.**

(30) Priorität: **15.03.84 DE 3409597**

(43) Veröffentlichungstag der Anmeldung: **23.04.86 Patentblatt 86/17**

(45) Bekanntmachung des Hinweises auf die Patenterteilung: **24.06.92 Patentblatt 92/26**

(84) Benannte Vertragsstaaten: **AT BE CH DE FR GB LI LU NL SE**

(56) Entgegenhaltungen:
EP-A- 0 068 742     EP-A- 0 103 195
DE-A- 3 242 598     DE-C- 752 259
FR-A- 2 276 277     FR-A- 2 312 465
GB-A- 1 121 572     GB-A- 1 601 208

(73) Patentinhaber: **Baierl & Demmelhuber GmbH & Co. Akustik & Trockenbau KG Hörnbachl 1 W-8121 Pähl(DE)**

(72) Erfinder: **ARHELGER, Wolfgang Sechsholdenerstrasse 88a W-6342 Haiger 2(DE)**

(74) Vertreter: **Dipl.-Phys.Dr. Manitz Dipl.-Ing., Dipl.-W.-Ing. Finsterwald Dipl.-Ing. Grämkow Dipl.-Chem.Dr. Heyn Dipl.-Phys. Rotermund Morgan, B.Sc.(Phys.) Robert-Koch-Strasse 1 W-8000 München 22(DE)**

EP 0 178 308 B1

**Beschreibung**

Die Erfindung betrifft Baustoff-Formteile aus einem asbestfreien Stoffgemisch sowie ein Verfahren und eine Vorrichtung für deren Herstellung.

Die Verwendung von EFA-Bindemittelzusätzen ist im Betonbau bekannt. Bei EFA-Bindemittelzusatz handelt es sich um den Elektro-Filter-Abzug von Verbrennungsrückständen in den Abgasführungen von Hochtemperatur-Steinkohle-Staubfeuerungen. Solche EFA-Füllstoffe wurden bisher auch schon im Betonbau eingesetzt, um z.B. die Hydratationswärme beim Abbinden des Betons zu senken, die Mikrorißbildung im Zementstein zu verhindern oder die Endfestigkeit und Wasserdichtigkeit des Zementsteines und dessen Säureresistenz zu erhöhen. Je nach Dosierung des EFA-Füllstoffes werden die im Zementstein auftretenden, eine geringe Festigkeit aufweisenden $Ca(OH)_2$-Kristalle in die die Festigkeit des Zementsteines im wesentlichen bestimmenden Kalziumsilikathydrate umgesetzt. Auch können weniger feste, mit $Fe_2O_3$-Einlagerungen durchsetzte Tetrakalziumaluminathydrate und Monosulfate gebildet werden.

Durch die weitgehende Neutralisation des $Ca(OH)_2$ wird in u.a. zementgebundenen, mit EFA-versetzten Baustoff-Formteilen die Lebensdauer von laugeempfindlichen Fasern wesentlich erhöht.

In der FR-A-2 312 465 wird ein Verfahren zur Herstellung eines faserverstärkten Formteils beschrieben, das Cellulosefasern zu einem kleinen Anteil als Hilfsfasern enthält. Die Cellulosefasern dienen dabei als sogenannte Flotationsfasern für die Glasfasern, wodurch die Glasfasern, vereinzelbar sind und schwimmen. Das Formteil wird im wesentlichen durch Glasfasern oder Mineralwolle stabilisiert und aus einer wäßrigen Zementsuspension hergestellt. Dieses Naßverfahren hat den Nachteil, daß ein hoher Energieaufwand und eine lange Trocknungszeit erforderlich sind. Ferner bilden sich beim Naßverfahren große Kapillarporen in dem Formteil, die die Festigkeit herabsetzen und die Witterungsempfindlichkeit stark erhöhen.

Aus der FR-A-2 276 277 ist ein Material zur Herstellung von verschiedenen Konstruktionselementen, wie Panele, Zwischenwände u.s.w, bekannt. Einer bekannten Zementmischung werden zur Verbesserung der Feuerfestigkeit Korkpartikel zugesetzt. Die Verwendung von Cellulosefasern ist nicht vorgesehen.

Aus der EP-A1-0 068 742 sind asbestfreie Formkörper bekannt, die aus einem Stoffgemisch hergestellt werden, das Zement, hochreaktives puzzolanisches Siliciumoxid und Cellulosefasern enthält. Angaben über die Größenverteilung der Cellulosefasern und das Verhältnis der Durchmesser der Cellulosefasern zu den Durchmessern des Bindemittels werden in dieser Druckschrift nicht gemacht.

In "Ullmanns Enzyklopädie der technischen Chemie", 4. Auflage, Band 23, Seiten 512-518 werden Verbundwerkstoffe beschrieben, bei denen ein Verstärkungsstoff, z.B. kugelförmige Teilchen,Whisker oder Fasern in einer Matrix eingebettet sind. Bei der Verwendung von kugelförmigen Teilchen von einheitlichem Radius als Verstärkungsstoff wird angegeben, daß bei dichtester Kugelpackung ein maximaler Füllungsgrad fmax = 0,680 zu erreichen ist.

Der vorliegenden Erfindung liegt die Aufgabe zugrunde, Baustoff-Formteile aus einem asbestfreien Stoffgemisch zu schaffen, welche hinsichtlich ihrer bauphysikalischen Langzeiteigenschaften, wie beispielsweise der Feuerfestigkeit und des Spannungsaufnahmevermögens, asbestbewehrten Formteilen möglichst gleichkommen.

Die Lösung der Aufgabe ergibt sich aus Anspruch 1. Bevorzugte Ausführungsformen sind den Unteransprüchen zu entnehmen. Ferner werden Verfahren zur Herstellung der Baustoff-Formteile sowie eine Vorrichtung zur Durchführung eines der Verfahren vorgeschlagen.

Das Stoffgemisch besteht in der Mischungs- und Formungsphase z.B. aus Zementklinkerpartikeln (Z) spezieller Mahlkörnigkeit, dem für deren Hydratationskristallbildung erforderlichen Anmachwasser ($W_Z$), Faserbewehrungsstoffen spezieller Aufschlußdickencharakteristik, die neben zementhydratationsunschädlichenFüllstoffen im wesentlichen Cellulosefasern (C-Fasern) enthalten, sowie langzeitqualitätserhaltenden EFA-Kleinstglaskugelzusätzen (E), die mit den im Zementstein u.a. auch entstehenden $Ca(OH)_2$-Kristallen unter Zugabe von Ergänzungswasser ($W_E$) puzzolanisch reagieren, diese bei ausreichender EFA- und $W_E$-Zugabe weitgehend in die eigentlich die Zementfestigkeit und -dichtigkeit bewirkenden Calciumsilikathydrate umwandeln und sich dabei voll oder teilweise auflösen bzw. sich mit diesen Sekundärkristallen überziehen.

Bekanntlich wird bei der Herstellung von Zement-Formteilen häufig Asbest als Bewehrungsbasis eingesetzt. Asbestbewehrte Zement-Formteile haben in vielerlei Hinsicht vorzügliche Eigenschaften und sind ökonomisch herstellbar. Allerdings hat sich herausgestellt, daß die mit der Herstellung und Verarbeitung solcher asbestbewehrter Zement-Formteile befaßten Menschen einem hohen gesundheitlichen Risiko ausgesetzt sind. Zur Vermeidung des gesundheitlichen Risikos der mit den faserbewehrten Zement-Formteilen arbeitenden Menschen wird deshalb nach einer befriedigenden Substitution des Asbestes gesucht.

Wenn man sich hinsichtlich der nutzbaren Biegezugfestigkeiten der erfindungsgemäßen Baustoff- Formteile, und zwar im wesentlichen wegen der Vermeidung von nicht wesentlich festigkeitsgefährdenden aber die Wasserdichtigkeit zunichte machenden Mikrorißbildungen im Bindemittelstein, auf Nutzbiegebelastungsfähigkeiten beschränkt, die ca. 75 % derjenigen der hochfesten Asbestzementformteile ausmachen, können die übrigen bauphysikalischen Eigenschaften (niedrige Wärmeleitfähigkeit, hohe Isolationswirkung, große Feuerwiderstandsfähigkeit, sehr niedriges Wasseraufnahmevermögen, sehr dehn- und schwindarmes Formänderungsverhalten bei Temperatur- und Feuchtigkeitswechsel) mit den erfindungsgemäßen Baustoff-Formteilen mindestens so gut wie bei Asbestzementformteilen erfüllt werden.

Im Brandbelastungsfall kommt noch als Vorteil hinzu, daß zum Beispiel bei erfindungsgemäßen Baustoffplatten, die in Brandabschnittsbegrenzungen als Wand- und Deckenbeplankungen eingesetzt werden, kein explosionsartiges Zerspringen auftritt, wie das bei Asbestfaserzementplatten häufig beobachtet wird.

Das erfindungsgemäße Baustoff-Formteil zeichnet sich dadurch aus, daß als Asbestfaserersatz ein Faserbewehrungsstoffgemisch spezieller Aufschlußdickencharakteristik eingesetzt wird, in welchem neben zementhydratationsunschädlichen Füllstoffen im wesentlichen Cellulosefasern (C-Fasern) und wahlweise, nur soweit es zu einer noch weiteren Steigerung des E-Moduls, d.h. der Steifigkeit erforderlich ist, in wesentlich geringeren Mengenanteilen Glasfasern (G-Fasern) (1 Volumenteil Glasfasern auf 5 bis 6 Volumenanteile C-/G-Mischfasern im lufttrockenen Zustand) enthalten sind und daß schließlich auf das Formteilvolumen insgesamt bezogen je nach Kapillarporosität (0 bis max. ca. 15 Vol% bei den hier verfolgten Anwendungen) des Bindemittelsteins, bei massedichter Stoffgemischformung, wenn die Volumenfüllfaktoren

$$(f_i = \frac{\Delta V_i}{V_{ges}} \quad ; \quad \Delta V_i = \text{anteiliges Volumen einer Stoffgemischkomponente}, \quad V_{ges} = \sum \Delta V_i = \text{Gesamtgemischvolumen})$$

$f_C$      für den C-Faseranteil im lufttrockenen Zustand

$f_{Bst}$      für den Bindemittelstein

$f_G$      für den G-Faseranteil

der Bedingung für massedichte Lagerung

$$f_C + f_{Bst} = 1$$

oder bei Zumischen der Glasfasern, soweit das erforderlich ist

$$f_C + f_{Bst} + f_G = 1$$

genügen, immerhin beachtlich hohe Fasergemischfüllfaktoren

$$0{,}27 < f_C < 0{,}32$$

oder bei Zumischen von Glasfasern

$$0{,}27 < f_C + f_G < 0{,}32 \text{ bei } f_G \approx 0{,}05$$
(vorzugsweise!)

erzielt werden.

Diese beachtlich hohen Fasergemischfüllfaktoren $f_C$ bzw. $f_C + f_G$ bei der für die erfindungsgemäßen Baustoff-Formteile vorgegebenen bauphysikalisch und festigkeitsmäßig hohen Langzeitqualität sind mit der dabei notwendigen Verteilungshomogenität der Stoffgemischanteile und der nur dadurch möglichen Festigkeitsausnutzung dann erzielbar, wenn bei der Aufbereitung, der schrittweisen Vermischung und schließlich der abschließenden Zwangsformung der Stoffgemischkomponenten im lufttrockenen bis hydratationswasserfeuchten Zustand (Zustand, bei dem in dem noch nicht ausgehärteten Formteil gerade soviel Wasser enthalten ist, wie durch die nachfolgende Hydratation verbraucht wird) entsprechend den Patentansprüchen 1 bis 7, modifiziert 8 und/oder 9 und/oder 10, 11, 12 vorgegangen wird.

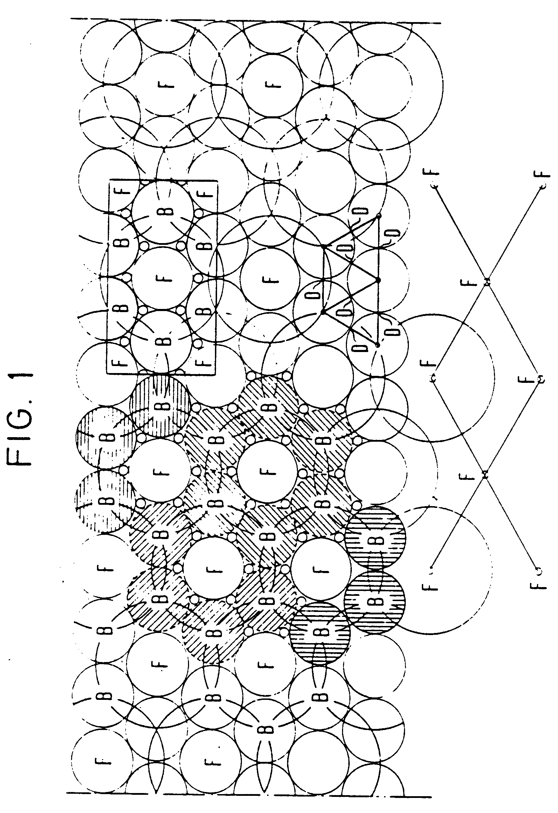

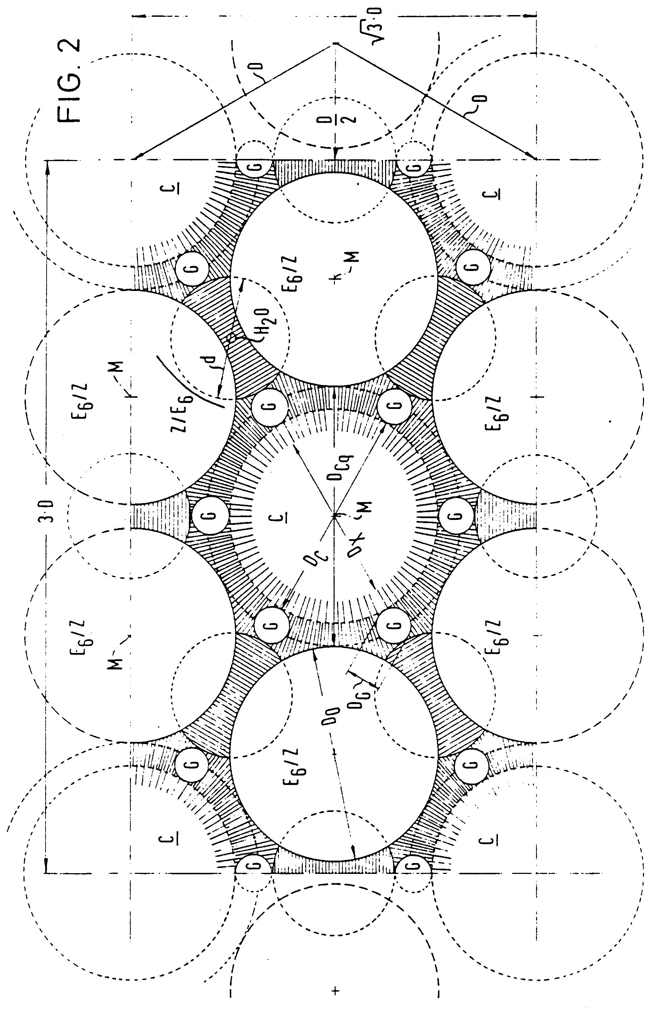

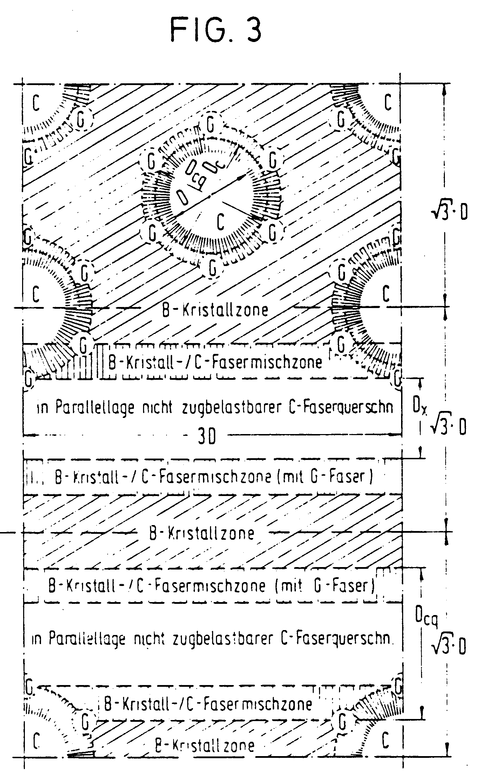

Weitere Einzelheiten, Merkmale und Vorteile der Erfindung ergeben sich aus der weiteren Beschreibung in Verbindung mit der beigefügten Zeichnung. Die Erläuterung der erfindungsgemäßen Verwendung, Aufschließung, Abmessungszuordnung, Mischung und Formung der Stoffgemischkomponenten ergibt sich in Verbindung mit den Lagerungsdarstellungen gemäß Figur 1 und 2. In Figur 3 ist ein schematischer, ebenfalls nur theoretischer Querschnitt entsprechend Figur 2 nach einer Bindemittelkristallisation dargestellt.

Der C-Faserhaltige Ausgangsrohstoff (Rest- und Abfallholz, preiswerte schnellwachsende Frischhölzer, Altpapier u.ä.) ist so auszuwählen, daß mit bekannten und geeigneten Zerkleinerungs- und Mahltechniken ohne stoffartbedingt unüberwindliche Schwierigkeiten reproduzierbar möglichst schmalbandige Aufschlußverteilungen insbesondere der im für die nachfolgenden Mischprozesse so aufbereiteten C-Faserhaufwerk enthaltenden C-Einzelfaserdurchmesser $D_C$ im lufttrockenen bzw. $D_{Cq}$-Aufschlußverteilungsgesamtbereich auf

ca. 40 $\mu$m < $D_C$ < 110 $\mu$m
bzw. ca. 50 $\mu$m < $D_{Cq}$ < 135 $\mu$m
eingestellt wird.

Wenn gemäß der Lagerungsdarstellung aus Figur 1 eine idealisiert triagonallagerungsdichte (dreieckförmige Anordnung erlaubt die geringstmögliche Anzahl von Partikeln unter der Voraussetzung, daß zwischen allen Fasern Partikel liegen müssen) hohlraumfreie Lagerung innerhalb kleiner hydrationswasser-feuchter Stoffgemischvolumina und gemäß Lagerungsdarstellung in Figur 2 in noch kleineren n-vielfach auftretenden Kombi-Stauraumvolumen-elementen (kleinste wiederholbare Elemente einer Anordnung, die eine maximale Unterbringungsdichte ermöglicht) $\Delta V_S$ für alle beteiligten Korn- und Faserpartikel samt ihrem Hüllwasser und C-Faserdepotwasser angenommen wird, so trifft diese Näherungsannahme umso besser zu, je schmalbandiger die Durchmesserverteilungen $D_C$ bzw. $D_{Cq}$ der C-Fasern, $D_G$ der G-Fasern (falls vorhanden) und $D_o$ der Z- und EFA-Großpartikel sind und je enger die Verhältniszuordnungen

$$0,9 < D_C/D_o < 1,1 \quad \text{d.h. } 44 \; \mu m < D_o < 100 \; \mu m$$

$$\text{bzw. } 1,1 < D_{Cq}/D_o < 1,35 \quad \text{z.B. schmalbandig } 70 \; \mu m < D_o < 100 \; \mu m$$

$$\text{oder schmalbandig } 75 \; \mu m < D_o < 77 \; \mu m$$

$$(\text{ohne EFA-Zugabe})$$

und falls vorhanden

$$0,175 < D_G/D_o < 0,195 \quad )$$

$$\text{bzw. } 0,16 < D_G/D_C < 0,22 \quad ) \quad \text{bei } f_G \approx 0,05$$

eingehalten werden, wenn dabei außerdem die Hydratationswasserzugabe

$$W_Z = \frac{G_{WZ}}{G_Z}$$

in Gewichtsanteilen des Zement auf den engen Bereich $0,375 \leq W_Z \leq 0,45$ für kapillarporenfreien bzw. kapillarporenarmen Zementstein beschränkt wird (Patentansprüche 1 und 4 anteilig).

Bei diesen erfindungsgemäßen Korngrößen-, Hüll- bzw. Depotwassermengen- und Faserdurchmesser-Zuordnungen sind die aufgrund von Ausreißhaftungskriterien zustande gekommenen Faserlängenvorgaben

$L_C \approx 1$ mm bis einige Millimeter
und falls vorhanden
$L_G \approx 1,5$ mm bis einige Millimeter

ausreichend groß, um bei einer entsprechenden verteilungshomogenisierenden erfindungsgemäßen Stoffkomponentenmischfolge und prinzipiellen lufttrockenen bis hydratationswasserfeuchten Mischtechnik (Patentansprüche 7, 8, 9, 10, 11, 12) eine in kleinen Stoffgemischvolumina mit Raumabmessungen im Millimeterbereich zunächst parallele bis schiefparallele überwiegende tangentiale Anlagerung der, falls vorhanden, wenigen ($f_G$ = 0,05) dünnen G-Fasern, entsprechend Patentanspruch 6, an die dazu relativ dicken C-Fasern im Mischungsvorgang (Patentanspruch 7a) und dann eine C-Faserstrang-parallele Anlagerung von BindemittelGroßpartikeln mit dem Durchmesser

$$D_o = \tfrac{1}{6} \text{ bis } \tfrac{1}{10} L_{Cmin}$$

samt ihren wasseroberflächenspannungsbedingt stabilen Wasserhüllen des Hüllzylinderdurchmessers $D = \beta.D_o$ in den anschließenden Misch- und Formungsvorgängen (Patentansprüche 7b) bis 7e), modifiziert 8, 9, 10, 11, 12) annehmen zu dürfen.

Erst das aufeinander abgestimmte Befolgen der Vorgehensregeln laut Patentansprüchen 1, 4 anteilig, sowie 7 und modifiziert 8, 9, 10, 11 und/oder 12 läßt in mehr oder weniger guter Näherung überhaupt erst das Stoffgemischlagerungsmodell für die hydratationswasserfeuchte triagonallagerungsdichte Anordnung paralleler C-Faserstränge bzw. evtl. entsprechend Patentanspruch 6 C-/G-Faserstränge mit allseits kompletter Umhüllung durch ihrerseits wieder wasserumhüllte Bindemittel-Großpartikel mit dem Durchmesser $D_o$ in kleinen hydratationswasserfeuchtenStoffgemischvolumina mit Raumabmessungen im Millimeterbereich zu, die ihrerseits wieder aus n-vielfach auftretenden kleineren Kombi-Stauraumvolumenelementen $\Delta \Psi_S$ gemäß Lagerungsdarstellung in Figur 2 mit deren Einordnungssystematik gemäß Lagerungsdarstellung in Figur 1 bestehend angenommen werden können.

Eine besonders vorteilhafte Vorgehensregel ergibt sich durch die erfindungsgemäße Anwendung der Kombination der in den Patentansprüchen 1, 4 anteilig, 7, modifiziert 8, 9, 10, 11 oder 12 verankerten Merkmalen. Hierbei ist die Näherungsannahme des reproduzierbaren n-vielfachen Auftretens aneinandergereihter Kombi-Stauraumvolumenelemente $\Delta \Psi_S$ gemäß Lagerungsdarstellung in Figur 2, in größeren hydratationswasserfeuchten Stoffgemischvolumina mit Raumabmessungen im Millimeterbereich und mit in diesen einigen Millimeterabständen entsprechend der angewandten Schütt- oder richtungsorientierten Lagenrieselungstechnik bei der Bauteilfeuchtformung mehr oder weniger zufällig wechselnden Faserrichtungen parallelfaseriger kleiner Stoffgemischvolumina zulässig.

Es können für die Bestimmung der Gesetzmäßigkeit der relativen Zuordnung von Partikel- und Faserabmessungen sowie Stoffgemischvolumenanteilen im Formteilgesamtvolumen zur Gewährleistung der wahlweisen, allseitigen C-/G-Faserstrangumhüllung mit zentraler, unter Depotwasseraufnahme gequollener C-Einzelfaser und faserstrangperipherer Bindemittelgroßpartikeln samt Partikelhüllwasser die geometrischen Gesetzmäßigkeiten für das idealisierte Kombi-Stauraumvolumenelement $\Delta\Psi_S$ gemäß Lagerungsdarstellung in Figur 2 unter Vorgabe der Volumensummenbedingung für massedichte Lagerung, der C-Faserquellerfahrung $D_{Cq} \approx 1,225 \cdot D_C$ sowie der auch für sperrungsarme Verschiebbarkeit der Stoffgemischanteile vorteilhaften Triagonallagerungsäquidistanz D (Abstand der einzelnen Fasern bei einer dreiecksförmigen Anordnung) zwischen den Zentren der Z-/$E_G$-Großpartikel (angenähert durch partikelvolumenäquivalente Kugelzonen [Partikel werden als ideale Kugeln betrachtet und das Partikelvolumen wird auf Kugelvolumen umgerechnet] des Durchmessers $D_o$) und den Zentren der C-Fasern (angenähert durch Kreisquerschnittsfasern des Durchmessers $D_C$ bzw. $D_{Cq} \approx 1,225 \cdot D_C$) näherungsweise berechnet und auf das Formteilgesamtvolumen übertragen werden.

Das $\Delta\Psi_S$-Lagerungsmodell gemäß Lagerungsdarstellung in Figur 2 gilt auch dann, wenn bei Erfüllung der Patentansprüche 2 und 3 die $Ca(OH)_2$-Kristallphasen des Zements durch Zugabe von EFA-Kleinstglaskugeln und Ergänzungshydratationswasser $W_E$ später weitestgehend puzzolanisch umgewandelt werden sollen.

Wenn das Verhältnis $G_E/G_Z \approx 0,18$ i. Mittel gemäß Patentanspruch 3 angesetzt wird, sind gemäß den Mengen- und Korngrößenverteilungsangaben für EFA in Patentanspruch 2 etwa 4 von 100 $D_o$-Großkugelzonen gemäß Figuren 1 und 2 mit EFA-Großpartikeln besetzt.

Wenn weiter im Falle von EFA-Zugabe gemäß Patentansprüchen 2 und 3 die größten Durchmesser der $D_o$-Kugelzonen gemäß Figur 2 sich in einem Verteilungsbereich

$$65 \ \mu m < D_o < 90 \ \mu m$$

bewegen, die grobkörnigen Z-Partikel mit etwa gleicher Korngrößenverteilung überwiegen, die wenigen sehr viel kleineren Z-Partiekl zu Klümpchen zusammengebacken in $D_o$-Kugelzonen Platz finden, die C-Fasern entsprechend Patentanspruch 1 passend selektiert sind, so haben bei Hydratationswasserzugabe gemäß Patentanspruch 4 alle EFA-Mittel ($E_M$)- und EFA-Kleinst($E_K$)-Partikel theoretisch in den Schlüpfkugelhohlräumen (Hohlräume für die Puzzolankügelchen in der Faser- und Zementpartikelanordnung) mit dem Durchmesser "d" Platz, die in der Figur 2 für das Kombivolumenelement $\Delta V_S$ zwischen den $D_o$-Kugelzonen eingezeichnet sind.

Nach diesen grundsätzlichen Erläuterungen zur näherungsweisen Gültigkeit des diskutierten Stoffgemischlagerungsmodells im massedicht zwangsgeformten hydratationswasserfeuchten Zustand wird die Lagerungsgeometrie und die davon abhängige Zuordnung der Volumenanteile der Stoffgemischkomponenten in einem Kombi-Stauraumvolumenelement $\Delta V_S$ gemäß Figur 2, welches in kleinen Stoffgemischvolumina mit Raumabmessungen im Millimeterbereich n-vielfach (nx3 x 5 x 10 = 150) neben-, über- und hintereinander gepackt auftritt, beschrieben.

In der folgenden Beschreibung wird von einer Zugabe von Glasfasern gemäß Patentanspruch 6 ausgegangen. Grundsätzlich können die Glasfasern auch weggelassen werden. In einem Anwendungsfall ohne Glasfasern sind die in Figur 2 mit G bezeichneten Raumelemente mit anderen feinen Partikeln - z.B. EFA-Feinstglaskügelchen - ausgefüllt.

Der Vorteil einer Glasfaserzugabe liegt in der Steigerung des E-Moduls, d.h. der Steifigkeit des Baustoff-Formteils, wenn erforderlich.

In dem Kombi-Stauraumvolumenelement $\Delta V_S$ mit den Kantenlängen $B_S$, $H_S$, $T_S$ gelten ausgedrückt durch

die Triagonallagerungsäquidistanz D gemäß Lagerungsskizze 2,

den Durchmesser $D_o$ der Kugelzonen,

deren Volumen etwa gleich groß sein soll wie das der Z- und $E_G$-Großpartikel mit Korngrößen $\approx D_o$,

den Durchmesser $D_C$ bzw. $D_{Cq}$ der lufttrockenen bzw. naßfeucht gequollenen C-Fasern,

den Durchmesser $D < D_{Cq}$,

bis zu dem das C-Faser-Depotwasser in die C-Faser eintritt,

die Wasserhüllfaktoren $\alpha$ und $\beta$,

für die in den Bereichen

$1 < \alpha < \overline{\beta}$; $1 < \beta < \overline{\beta}$; $\overline{\beta} \approx 1,22$ bis 1,3 wasseroberflächenspannungsbedingt stabile Partikelwasserumhüllungen mit Außenhülldurchmessern "$\alpha.D_o$" bzw. "$\beta.D_o$" vorausgesetzt werden dürfen,

den Durchmesse d der Schlüpfkugelhohlräume in denen im Falle von EFA-Zugabe die mittleren ($E_M$) und kleinsten ($E_K$) EFA-Partikel theoretisch komplett unterbringbar sein müssen,

den Durchmesser $D_G$ der evtl. an die C-Fasern angelagerten G-Fasern, wobei die entsprechenden Räume ohne G-Fasern z.B. mit entsprechenden EFA-Kleinstpartikeln ausgefüllt sind,

im Falle massedichter Lagerung aller am Stoffgemisch beteiligten Komponenten die folgenden Beziehungen:

$$B_S = 3 \cdot D = 3 \cdot \beta \cdot D_o \qquad ; \qquad D = \beta \cdot D_o$$

$$H_S = 3^{0,5} \cdot D = 3^{0,5} \cdot \beta \cdot D_o \qquad ;$$

$$T_S = \alpha \cdot D_o$$

$$D_{Cq} \approx 1,225 \cdot D_C \quad (\text{Quellerfahrungswert})$$

$$D_{Cq} \leq 2D - D_o \quad (\text{Äquidistanzbedingung für triagonallage-}$$
$$\text{rungsdichte Packung der Bindemittelgroß-}$$
$$\text{partikel und umlagerten C-Fasern im}$$
$$\text{Quellzustand der C-Fasern bei voller}$$
$$\text{Depotwasseraufnahme})$$

oder umgewandelt in die Bestimmungsleichung für $\beta$

$$(1) \quad D_{Cq} \leq 2\beta \cdot D_o - D_o \longrightarrow \beta \geq 0,5\left(1 + \frac{D_{Cq}}{D_o}\right) ;$$

$$\text{bzw.} \quad \beta \geq 0,5\left(1 + 1,225 \cdot \frac{D_C}{D_o}\right)$$

Volumenrelationen, beschrieben durch Volumenfüllfaktoren f;

Indizes : Z für Zement, E für EFA, W für Hüll- und Depotwasser, C für luftrockene C-Faser, Cq für gequollene C-Faser, B für Bindemittel CW für C-Faser-Depotwasser, HW für Hüllwasser.

$$(2) \quad f_C = \frac{\Delta V_C}{\Delta V_S} = \frac{(1 + {}^4/4)\ \widetilde{\pi}/4\ D_C^2 \cdot \alpha \cdot D_o}{3\ D\ 3^{0,5}\ D \cdot \alpha D_o} = \frac{0,3023}{\beta^2}\left(\frac{D_C}{D_o}\right)^2$$

$$(3) \quad f_G = \frac{\Delta\Psi_G}{\Delta V_S} = \frac{(10 + {}^4/2)\,{}^\pi/4\,D_G{}^2 \cdot \alpha D_0}{3\,D\,3^{0,5}\,D \cdot \alpha D_0} = \frac{1,814}{\beta^2}\left(\frac{D_G}{D_0}\right)^2$$

$$f_G \approx 0,005 \longrightarrow \frac{D_G}{D_0} = \beta\,\frac{0,05^{0,5}}{1,814^{0,5}} = \beta \cdot 0,166 \quad (3')$$

$$(4) \quad f_B = f_Z + f_E = f_Z + f_{E_G} + f_{E_M} + f_{E_K} \qquad \text{(Bindemittelpartikel insgesamt)}$$

$$(5) \quad f_Z + f_{E_G} = \frac{\Delta\Psi_{D_0}}{\Delta V_S} = \frac{(2 + {}^4/2)\,{}^\pi/6\,D_0{}^3}{3\,D\,3^{0,5}\,D \cdot \alpha D_0} = \frac{0,4031}{\beta^2 \cdot \alpha} \qquad \text{(Z-/ E}_G\text{-Großpartikel)}$$

$$(6) \quad f_{E_M} + f_{E_K} = \frac{\Delta\Psi_d}{\Delta\Psi_S} = \frac{(4 + {}^4/2)\,{}^\pi/6\,d^3}{3\,D\,3^{0,5}\,D \cdot \alpha D_0} = \frac{\pi}{3\,3^{0,5}\,\beta^2 \alpha}\left(\frac{d}{D_0}\right)^3 =$$

$$= \frac{0,6047}{\beta^2 \cdot \alpha}\left(\frac{d}{D_0}\right)^3 \quad \text{EFA-Mittel- u. Kleinstpartikel}$$

$(7) \quad d \leqq D_0\,[(\alpha^2 + \beta^2)^{0,5} - 1]$ (Abgrenzung der Schlüpfbugelhohlräume)

EP 0 178 308 B1

$$(8) \quad f_{CW} = \frac{(1 + {}^4/_4) \, {}^{\pi}/_4 \, (D_{C_q}{}^2 - D_C{}^2) \cdot \alpha \, D_o}{3 \, D \, 3^{0,5} \, D \, \alpha \, D_o} = \frac{{}^{\pi}/_2 \, D_C{}^2 \cdot 0,5}{3 \cdot 3^{0,5} \cdot \beta^2 \cdot D_o{}^2} =$$

$$= \frac{0,1512}{\beta^2} \left(\frac{D_C}{D_o}\right)^2 \qquad \text{(C-Faser-Depotwasser)}$$

(9)   Bedingung für massedichte Lagerung

$$f_C + f_Z + f_{EG} + f_{EM} + f_{EK} + f_{CW} + \underset{\uparrow \text{Partikelhüllwasser}}{f_{HW}} + f_G = 1,0$$

Präzisierung der Volumenfüllfaktoren infolge Patentansprüche 2, 3 und 4

Was im Gesamtformteilvolumen gilt, soll auch im Volumenelement $\Delta \forall_S$ angenommen werden.

$$\frac{\forall_Z + \forall_E}{\forall_{ges}} = \frac{\forall_Z + \forall_E}{\forall_Z + \forall_{EG}} \cdot \frac{\forall_Z + \forall_{EG}}{\forall_{ges}} = \frac{\forall_Z}{\forall_Z} \cdot \frac{1 + {}^{\forall_E}/_{\forall_Z}}{1 + {}^{\forall_{EG}}/_{\forall_-}} \cdot (f_Z + f_{EG}) =$$

$$= f_Z + f_{EG} + f_{EM} + f_{EK}$$

$\forall_{EG} = 0,15 \cdot \forall_E$ = Volumen der EFA-Großpartikel mit $40\mu m < \emptyset_{EG} < 90\mu m$

9

$$\frac{V_E}{V_Z} = \frac{G_E}{G_Z} \cdot \frac{\gamma_Z}{\gamma_E} = 0,18 \cdot \frac{3,2}{2,4} = 0,24 = \frac{f_E}{f_Z}$$

Mittelwert gem. Patentanspruch 4

Verhältnis der spezifischen Gewichte für Zement und EFA

$$(f_Z + f_{EG}) + (f_{EM} + f_{EK}) = \frac{1 + 0,24}{1 + 0,15 \cdot 0,24} (f_Z + f_{EG}) = 1,1969 \, (f_Z + f_{EG})$$

$$(10) \quad f_{EM} + f_{EK} = (1,1969 - 1) \cdot (f_Z + f_{EG}) = 0,1969 \, (f_Z + f_{EG}) =$$

s.(5)

$$= \frac{0,0794}{\beta^2 \cdot \alpha} = 0,85 \, f_E$$

10

$$(11) \quad f_E = \frac{0,0934}{\beta^2 \cdot \alpha} = \left( \frac{f_{EM} + f_{EK}}{0,85} \right)$$

$$(12) \quad f_{EG} = 0,15 \, f_E = \frac{0,0140}{\beta^2 \cdot \alpha}$$

$$(13) \quad f_Z = f_Z + f_{EG} - f_{EG} = \frac{0,4031 - 0,0140}{\beta^2 \cdot \alpha} = \frac{0,3891}{\beta^2 \cdot \alpha} = \frac{f_E}{0,24}$$

$$= \frac{0,0934}{0,24 \, \beta^2 \cdot \alpha} = \frac{0,3891}{\beta^2 \cdot \alpha}$$

$$(\text{o.U.})$$

$$(14) \quad f_{CW} + f_{HW} = f_{WZ} + f_{WE}$$

Ergänzungshydrationswasseranteil für vollständige EFA-Reaktion

Hydratationswasseranteil für Zement

Hüllwasser

Depotwasser

(siehe (8))

$$f_{WZ} = \frac{V_{WZ}}{V_{ges}} = \frac{V_{WZ}}{V_Z} \cdot \frac{V_Z}{V_{ges}} = \frac{V_{WZ}}{V_Z} \cdot f_Z$$

$$f_{WE} = \frac{V_{WE}}{V_{ges}} = \frac{V_{WE}}{V_E} \cdot \frac{V_E}{V_{ges}} = \frac{V_{WE}}{V_E} \cdot f_E$$

$$\frac{V_{WZ}}{V_Z} = \frac{G_{WZ}}{G_Z} \cdot \frac{\gamma_Z}{\gamma_W} = W_Z \frac{\gamma_Z}{\gamma_W} = W_Z \cdot 3,2$$

Verhältnis der spezifischen Gewichte für Zement und Wasser

$0,375 \le W_Z \le 0,45$ gem. Patentanspruch 4

$$\frac{V_{WE}}{V_E} = \frac{G_{WE}}{G_E} \cdot \frac{\gamma_E}{\gamma_W} = W_E \frac{\gamma_E}{\gamma_W} = 0,12 \frac{2,4}{1,0} =$$

Verhältnis der spezifischen Gewichte für EFA und Wasser

$W_E \approx 0,12$ gem. Patentanspruch 4

$$(15) \quad f_{WZ} + f_{WE} = W_Z \cdot 3,2 \cdot f_Z + W_E \, 2,4 \cdot f_E$$
$$f_E = 0,24 \, f_Z$$

Aus der Bedingung (9) für massedichte Lagerung folgt nun mit den gem. Patentansprüchen 3,4 und 5 präzisierten Volumenfüllfaktoren (10) bis (15)

$$(16) \quad f_C + f_Z + f_E + f_{WZ} + f_{WF} + f_G = 1$$

und daraus bei nach (1) vorgegebenen Hüllwasserfaktor $\beta_{min}$ und den nach (2) und (3) gegebenen Füllfaktoren $f_C$ und $f_G$ eine Bestimmungsgleichung für den Hüllwasserfaktor $\alpha$:

$$(17) \quad \frac{0,3023}{\beta^2}\left(\frac{D_C}{D_0}\right)^2 + f_G + \frac{0,3891}{\beta^2\cdot\alpha} + \frac{0,0934}{\beta^2\cdot\alpha} + W_Z\cdot 3,2\cdot f_Z + W_E\cdot 2,4\cdot f_E = 1$$

$$(f_Z) \quad (f_E)$$

$$\text{Vorgabe}\approx 0,05$$

oder anders zusammengefaßt:

$$\frac{0,3023}{\beta^2}\left(\frac{D_C}{D_0}\right)^2 + f_G + \frac{0,3891}{\beta^2\cdot\alpha}(1+3,2\cdot W_Z) + \frac{0,0934}{\beta^2\cdot\alpha}(1+2,4\cdot W_E) = 1$$

$$\approx 0,12$$

umgeformt:

$$\alpha\left[1 - \frac{0,3023}{\beta^2}\left(\frac{D_C}{D_0}\right)^2 - f_G\right] = \frac{1}{\beta^2}\left[0,3891+0,0934+1,2451\,W_Z+0,0269\right]$$

und schließlich

$$(18) \quad \alpha = \frac{0,5094 + 1,2451\,W_Z}{\beta^2\left[1-f_G\right] - 0,3023\left(\frac{D_C}{D_0}\right)^2}$$

Wenn die Gleichung (18) mit den Bedingungen für die Wasserfüllfaktoren $1<\alpha<\overline{\beta}$ ; $1<\beta<\overline{\beta}$ ; $\overline{\beta}\approx 1,22$ bis 1,3 für stabile Partikelwasserhüllen für Misch,- und Formungsvorgänge im halbtrockenen bis naßfeuchten Zustand des Stoffgemischs für verschiedene Werte $3,375< W_Z< 0,45$ als Bedingung für einen kapillarporenfreien/- armen Zementstein unter Einhaltung der Triagonallagerungsbedingung (1) als weitere Vorgabebegrenzung für den Wasserhüllfaktor $\beta_{min}$ mehrfach für verschiedene Parametervariationen $D_C / D_0$, $W_Z$, $\beta \geq 0,5(1+1,225\,{}^{D}C/D_0)$ durchgerechnet wird, so ergeben sich sinnvolle Lösungen nur in dem engen Bereich

$$0,9 < {}^{D}C/D_0 < 1,1 \quad (\text{Patentanspruch 1})$$
$$\text{bzw.} \quad 1,1 < {}^{D}Cq/D_0 < 1,35$$

Wenn für den Fall, daß Glasfasern in geringem Umfang zugegeben werden, $f_G = 0,05$ konstant gehalten und $f_C$ größtmöglich angestrebt wird, folgt aus (3):

ca. $0,175 < D_G/D_o < 0,195$ (Patentanspruch 6)

Beispiel Nr.1:

$$(\text{Vollrechnung für } {}^{D_C}/_{D_o} = 1)$$

a) $W_Z = 0,375; \quad \beta = 1,113; \quad \alpha = 1,116; \quad f_G = 0,05;$

$$\text{aus (2): } f_C = 0,244;$$

$$\text{aus (3'): } {}^{D_G}/_{D_o} = {}^{D_G}/_{D_C} = 0,185 \quad (13\mu m < D_G < 17\mu m)$$

$$\text{aus (10): } f_{EM} + f_{EK} = 0,0574;$$

$$\text{aus (6) mit (10): } {}^{d}/_{D_o} = 0,5083$$

$$\text{aus (7): } {}^{d_{max}}/_{D_o} = 0,5761$$

$f_{EM} + f_{EK}$ ist in Schlüpfkugelzone unterbringbar

14

aus (13): $f_Z = 0,2815$;

aus (11): $f_E = 0,0676$;

aus (15): $f_{WZ} + f_{WE} = 0,3573$;

aus (8): $f_{CW} = 0,1221$;

aus (14): $f_{HW} = 0,2355$;.

$$\frac{f_{CW}}{f_{WZ} + f_{WE}} = 0,3417 \quad \text{(34\% des Anmachwassers als C-Faser-Depotwasser)}$$

$$\boxed{\begin{array}{c} d_{max} = 40\mu m \longrightarrow D_{o_{min}} = 69\mu m \\[1ex] \text{unkritische Durchmesserverteilung bei} \\ \text{EFA-Zugabe} \\ \text{ca. } 70\mu m \leq D_o \leq 90\mu m \\[1ex] \text{ca. } 70\mu m \leq D_C \leq 90\mu m \end{array}}$$

Kontrolle nach (16):

$0,244 + 0,2815 + 0,0676 + 0,3573 + 0,05 = 1,0004$ (in Ordnung)

b) $W_Z = 0,45$; $\beta = 1,113$; $\alpha = 1,223$; $f_G = 0,05$;

aus (2): $f_C = 0,244$;

aus (3'): $\frac{D_G}{D_o} = \frac{D_G}{D_C} = 0,185$ ($11\mu m > D_G > 17\mu m$)

aus (10): $f_{EM} + f_{EK} = 0,0524$;

aus (6) mit (10): $\frac{d}{D_o} = 0,5082$

aus (7): $\frac{d_{max}}{D_o} = 0,6536$

$\left.\begin{array}{c} \\ \\ \\ \end{array}\right\}$ $f_{EM} + f_{EK}$ ist in Schlüpfkugel unterbringbar

aus (13): $f_Z = 0,2568$;

aus (11): $f_E = 0,0616$;

aus (15): $f_{WZ} + f_{WE} = 0,3875$;

$$\boxed{\begin{array}{c} d_{max} = 40\mu m \longrightarrow D_{o_{min}} = 61\mu m \\[1ex] \text{unkritische Durchmesserverteilung bei} \\ \text{EFA-Zugabe} \end{array}}$$

$$\text{ca. } 61\mu m \leq D_{\ddot{o}} \leq 90\mu m$$

aus  (8): $f_{CW}=0,1221$;

$$\text{ca. } 61\mu m \leq D_C \leq 90\mu m$$

aus (14): $f_{HW}=0,2654$;

$$\frac{f_{CW}}{f_{WZ} + f_{WE}} = 0,315 \; (\approx 32\% \text{ des Anmachwassers als C-Faser-Depotwasser})$$

Kontrolle nach (16):

$$0,244+0,2568+0,0616+0,3875+0,05 = 0,9999 \quad (\text{in Ordnung})$$

Beispiel Nr.2:

16

(Vollrechnung für $D_C/D_O = 1,1$

a) $W_Z = 0,375$; $\beta = 1,174$; $\alpha = 1,03$; $f_G = 0,05$;

aus (2): $f_C = 0,2654$;

aus (3'): $D_G/D_C = 0,195$; $D_G/D_C = 0,177$

$(14\mu m < D_G < 187\mu m)$

aus (10): $f_{EM} + f_{EK} = 0,0559$;

aus (6) mit (10): $d/D_O = 0,5083$

$f_{EM} + f_{EK}$ ist in Schlüpfkugelzone unterbringbar

aus (7): $d_{max}/D_O = 0,5618$

aus (13): $f_Z = 0,2741$;

aus (11): $f_E = 0,0658$;

aus (15): $f_{WZ} + f_{WE} = 0,3479$;

aus (8): $f_{CW} = 0,1327$;

$d_{max} = 40\mu m$ -- $D_{O\,min} = 71\mu m$

unkritische Durchmesserverteilung bei EFA-Zugabe

ca. $70\mu m \leq D_O \leq 90\mu m$

ca. $77\mu m \leq D_C \leq 100\mu m$

aus (14): $f_{HW}$=0,2152;

$$\frac{f_{CW}}{f_{WZ} + f_{WE}} = 0,3814 (\approx 38\% \text{ des Anmachwassers als C-Faser-Depotwasser})$$

Kontrolle nach (16):

0,2654+0,2741+0,0658+0,3479+0,05 = 1,003  (in Ordnung)

b) $W_Z$ = 0,45;  $\beta$= 1,174;  $\alpha$ = 1,113;  $f_G$ = 0,05;

aus  (2): $f_C$ = 0,2654;

aus (3'): $^{D_G}/_{D_O}$ = 0,195 (13µm $< D_G <$ 18µm)

aus (10): $f_{EM} + f_{EK}$ = 0,0518;

aus (6) mit (10): $^{d}/_{D_O}$ = 0,5083

aus (7): $^{d_{max}}/_{D_O}$ = 0,6177

aus (13): $f_Z$ =0,2536;

aus (11): $f_E$ =0,0609;

aus (15): $f_{WZ}+f_{WE}$=0,3827;

aus (8): $f_{CW}$=0,1327;

aus (14): $f_{HW}$=0,2500;

$$d_{max} = 40\mu m \rightarrow D_{O_{min}} = 65\mu m$$
unkritische Durchmesserverteilung bei

EFA-Zugabe

ca. 65µm $\leq D_O \leq$ 90µm

ca. 72µm $\leq D_C \leq$ 100µm

$$\frac{f_{CW}}{f_{WZ} + f_{WE}} = 0,3467 (35\% \text{ des Anmachwassers als C-Faser-Depotwasser})$$

Kontrolle nach (16):

0,2654+0,2536+0,0609+0,3827+0,05 = 1,01        (im Rahmen der Rechengenauigkeit in Ordnung)

Aus diesen Beispielrechnungen geht hervor, welch hohe Formteilvolumenanteile für die Faserbewehrungskomponente Cellulosefasern auch bei Zugabe von EFA-Bindemittelzusätzen in diesen erfindungsgemäß bei massedichter Formung dann wasserdichten, säureresistenten, nicht entflammbaren und wegen der hohen Cellulosefaseranteile stark wärmeflußhemmenden und schalldämmenden sowie sprödbruchunempfindlichen Baustoff-Formteilen relativ hoher Biegungsbelastungsfähigkeit möglich sind, wenn die Mischungs- und Formungsvorschriften gem. Patentansprüchen 7, modifiziert 8, 9, 10, 11 und 12 und die damit mögliche Realisierung der Bemessungs- und Dosierungsvorschriften gem. Patentansprüchen 1 bis 6, im Detail vorgeschrieben, durch die Bestimmungs- und Kontrollformeln (1) bis (18) befolgt werden.

Die aus den weiter vorn erläuterten Gründen für die Sicherung der Langzeitqualitätskonstanz dieser BaustoffFormteile sehr vorteilhafte EFA-Bindemittelzugabe oder äquivalente Ersatzstoffzugabe gleicher chemischer Reaktionseigenschaften zum Zementpulver bedarf dann einer Zementmahlfeinheit mit Korngrößen $D_o$ mit überwiegenden Abmessungen im Bereich $65\mu m < D_o < 90$ bis $100\mu m$ und eines geeigneten C-Faserausgangsrohstoffs, aus dem sich mit bekannten Zerkleinerungs- und Mahltechniken C-Faserflocken herstellen lassen, deren C-Einzelfasern Längen von ca. 1 mm bis einige Millimeter aufweisen und deren Durchmesserverteilung $D_C$ bzw. $D_{Cq}$ im lufttrockenen bzw. naßfeucht gequollenen Zustand die Bemessungsvorschrift

$$0,9 < \frac{D_C}{D_o} < 1,1$$

$$\text{bzw.} \qquad 1,1 < \frac{D_{Cq}}{D_o} < 1,35$$

erfüllen.

Die dann mögliche verteilungshomogene Unterbringung von C-Einzelfasern bei allseitiger Bindemittelsteinumhüllung erfordert eine Volumenanteildosierung gem. Patentanspruch 5 (und 6)

$0,22 < f_C < 0,27$
$0,27 < f_{Cq} < 0,38$

bei

$$0,9 < \frac{D_C}{D_o} < 1,1$$

$$\text{bzw.} \qquad 1,1 < \frac{D_{Cq}}{D_o} < 1,35$$

Die höchste Faserzugabe ist also bei dem höchsten Verhältnis $D_C/D_o$ möglich. Dieses kann über 1,1 hinaus aber nur gesteigert werden, wenn das Hydratationswasser/Zement-Gewichtsverhältnis $W_Z$ auf einen Wert $W_Z = G_{WZ}/G_Z > 0,45$ angehoben wird, womit leider eine Erhöhung des Bindemittelsteinkapillarporenanteils einhergeht. Dies ist, wenn Wasserdichtigkeit der Baustoff-Formteile verlangt wird, aber nicht möglich.

Für das Rechenbeispiel Nr. 1a) mit $D_C/D_o = 1,0$ und $W_Z = 0,375$; $W_E = 0,12$, für das die Lagerungsskizze 2 relativ geometrisch richtig gezeichnet ist, werden mit den spezifischen Stoffgewichten

$\gamma Z = 3,2$ g/cm³; $\gamma_E = 2,4$ g/cm³; $\gamma_C$ 1,49 g/cm³;
$\gamma G = 2,6$ g/cm³; $\gamma W = 1,0$ g/cm³

in der folgenden Wertetabelle beispielhaft Umrechnungen von Volumenanteilen auf Gewichtsanteile vorgenommen, welche für Dosierungszwecke eher benötigt werden.

19

Tabelle I

| Stoff-komponente | $f_i$ | $\gamma_i f_i$ | $\gamma_i f_i / \Sigma \gamma_i f_i$ | C-Faserbezogene Gewichtsanteile |
|---|---|---|---|---|
| C-Faser | 0,244 | 1,49 x 0,244 = 0,3636 | 19,0 % | 1,0 |
| G-Faser | 0,05 | 2,6 x 0,05 = 0,130 | 6,8 % *) | 0,36 |
| Zement | 0,281 | 3,2 x 0,281 = 0,8992 | 47,0 % | 2,47 |
| EFA | 0,068 | 2,4 x 0,068 = 0,1632 | 8,5 % | 0,45 |
| Depot-wasser | 0,122 | 1,0 x 0,122 = 0,1220 | 6,4 % | 0,34 |
| Hüll-wasser | 0,235 | 1,0 x 0,235 = 0,2350 | 12,3 % | 0,65 |
| $\Sigma$ | 1,000 | $\gamma_{Formteil}$ = 1,913 | 100 % | 5,27 |

$\gamma_i$ = spezifische Stoffgewichte

*) Wenn G-Faser fortgelassen wird, ist deren ca. 5 %-Volumenanteil durch Erhöhung des Bindemittelpartikelvolumens und Wasservolumens bei konstantem Gesamt-Wasser-Bindemittelwert, also Beibehaltung der gewünschten Kapillarporosität, zu ersetzen.

Die vorstehend erläuterten Stoffgemischlagerungsannahmen und die dafür mit Rechenbeispielen belegten relativen Zuordnungen von Partikel- und Faserabmessungen sowie Stoffgemischanteilen im hydratationswasserfeuchten Formteil gestatten noch die folgenden Ergänzungsaussagen:

Ca. 28 bis 38 % des gesamten Hydratationswassers werden als C-Faser-Depotwasser aufgesaugt und an einer zu schnellen Verdunstung beim Erhärten und Abbinden des Formkuchens gehindert. Dadurch werden die an den Randzonen dieser Formteile bei zu schneller Wasserverdunstung sonst auftretenden Abbinderisse im Bindemittelstein praktisch voll verhindert.

Da die Hydratationsgele zumindest in die äußeren Feuchträume der C-Fasern eindringen, ergibt sich quasi eine "Verzahnung" des erhärteten Bindemittelsteins mit den Cellulosefasern C, die deren Entflammbarkeit im ausgehärteten Formteil praktisch verhindert.

Der Volumenanteil der Cellulosefasern, ausgedrückt durch den Stauraum-Füllfaktor $f_C$ der trockenen Cellulosefasern bewegt sich im Bereich zwischen 0,22 und 0,27, während sich der Volumenanteil der gequollenen und endgültig ausgehärteten Cellulosefasern $f_{Cq}$ im Bereich von 0,33 bis 0,40 bewegt. Dadurch wird die Wärmeleitfähigkeit des Baustoff-Formteiles gegenüber dem reinen Bindemittelstein erheblich herabgesetzt, was auch die Feuerwiderstandsfähigkeit des Produktes erhöht. Auch das Schalldämmungsvermögen wird damit verbessert.

Das vorstehend beschriebene Baustoff-Formteil wird wie folgt hergestellt:
Cellulosefaserhaltige Rohstoffe werden mit nach dem Stand der Technik bekannten Zerkleinerungs- und Mahltechniken zu C-Faserflocken aus Einzelfasern mit den Dicken DC bis $D_{Cq}$, je nach Feuchtegehalt, gebracht. Der Quelldurchmesser $D_{Cq}$ läßt sich vorzugsweise derart kontrollieren, daß Faserstichproben entnommen und mit Wasser angereichert werden, welche anschließend leichtgepreßt und dann mikroskopisch untersucht werden. Mit bekannten Methoden werden dann die stauraumvolumetrischen und gewichtsspezifischen Eigenschaften der Feuchtfasern und der Depotwassersättigungsgrad der Cellulosefasern bestimmt.

Ist der Wassersättigungsgrad der mischtechnisch weiterzuverarbeitenden Cellulosefasern und das spezifische Gewicht der luftfeuchten Cellulosefasern ($\gamma_C \approx$ 1,49 g/cm$^3$) bekannt, so kann über das tatsächliche spezifische Gewicht der Feuchtfaser das für ein vorgegebenes Gesamtstoffmischungs-Stauraumvolumen benötigte Feuchtfasergewicht entsprechend dem in der Tabelle angegebenen Stauraum-Volumenfüllfaktor $f_C$ bzw. $f_{Cq}$ bestimmt werden, woraus sich die benötigte Fasermenge ergibt.

Auf diesen Dosierungsleitwert (1,0) bezogen, ergeben sich dann die in Tabelle I in der letzten Spalte angegebenen Gewichtsanteile der übrigen Stoffmischungskomponenten.

Unter Beachtung der vorstehenden Bemessungs- und Dosierungsangaben werden in einem homogenisierenden Mischvorgang die Cellulosefasern, die Zement- und die EFA-Partikel mit Hilfe einer pneumatisch/mechanischen Zwangsmischung vermischt. Die Zwangsmischanlage muß eine hochturbulente gegenseitige Bombardierung der eingebrachten Cellulosefasern, der Zement- und EFA-Partikel erlauben.

Wesentlich ist es, daß alle Mischungskomponenten im trockenen, bzw. höchstens luftfeuchten Zustand zugegeben werden. Aufgrund der vorstehenden Bemessungsangaben wird die in Fig. 2 idealisiert dargestellte Struktur nahezu erreicht, da die Partikel aufgrund van der Waals'scher Kräfte, elektrostatischer Kräfte und/oder Flüssigkeitsbrückenbildung infolge von aus den luftfeuchten Celluloseflocken evtl. austretenden Flüssigkeitströpfchen gegenseitig fixiert werden.

Die Zwangsmischung kann beispielsweise mit einer Schlagkreuzmühle mit Rundsieben herbeigeführt werden. Es sind geeignete Hintereinanderschaltungen unterschiedlich großer Schlagkreuzmühlen mit unterschiedlichen Sieblochformen und -größen in den Rundsieben denkbar, die z.B. zuerst eine Vorzerkleinerung der cellulosefaserhaltigen Rohstoffe zu C-Stoffschnitzeln oder auch gleich zu C-Faserflocken und in einem zweiten Zerkleinerungsprozeß in derselben oder einer nachgeschalteten Zerkleinerungsanlage die Beimischung der Feststoffpartikel erlauben, wobei letztere wie kleine Geschosse in das C-Schnitzel- bzw. C-Faserhaufwerk eindringen und dieses dabei in Einzelfasern mit zwischengelagerten Feststoffpartikeln aufteilen. Solche Schlagkreuzmühlen mit Rundsieben sind dann gleichzeitig Zerkleinerungs- und pneumatisch/mechanisch wirkende Mischorgane.

In einem sich anschließenden Verfahrensschritt wird das nahezu ideal vermischte Feststoffpartikelgemisch von überschüssiger Ansaug- und Transportluft, welche bei dieser Zerkleinerungsmethode zwangsweise durchgesetzt und damit auch gleichzeitig dem pneumatisch/mechanischen Mischvorgang automatisch mitliefert, befreit.

In einer apparativen Ausführungsform ist hierzu ein Wehr denkbar, über das die Feststoffmischung hinwegtransportiert wird, wobei die überschüssige Transportluft nach vorne und oben entweichen kann.

In einem dritten Verfahrensschritt wird dem Feststoffpartikelgemisch während des senkrechten Herabfallens in schwachturbulentem Schwebestrom gerade soviel Wassernebel zugemischt, daß ohne Partikelausspülungen mindestens eine Hydratationswassermenge in das Gemisch eingelagert wird, welche den oben stehenden Bemessungsangaben entspricht. Es werden also um die Fasern und die Partikel Wasserhüllen gebildet, welche durch die Oberflächenspannung des Wassers stabilisiert sind. Dabei ist eine leichte Überdosierung des Wassers solange unschädlich, wie keine Feststoffpartikelausspülung erfolgt. Auch darf keine die Homogenität der Verteilung zerstörende Umlagerung der Feststoffpartikel auftreten.

Gemäß Ausgestaltung der Erfindung in Anspruch 9 kann heißer Wasserdampf statt umgebungstemperiertem Wassernebel eingetragen werden. Diese Alternative erleichtert den Wasserzutritt und erhöht, falls etwas niedrigere Formteileendfestigkeiten nach der 28-Tage-Aushärtung des Bindemittelsteins hingenommen werden können, die Erstarrungsgeschwindigkeit des Bindemittel-/Wassergemisches nach der abschließenden Zwangsformung des Baustoff-Formteils und erleichtert damit dessen weniger beschädigungsempfindliche Handhabung nach Durchlaufen des Verfahrensschrittes 7 c) wesentlich.

Sodann wird das Material in jedem Fall nach bekannten Techniken einer Schütt- und Rieselverformung unterzogen, indem es beispielsweise auf einem Formband abgelegt wird, und anschließend verdichtungsgeformt (z.B. Plattenpressung).

Falls weniger hohe Ansprüche an die Witterungsbeständigkeit, die Feuerwiderstandsfähigkeit, die Biege-Zugfestigkeit, das Schwind- und Dehnungsverhalten der Baustoff-Formteile gestellt werden, so kann auf die Verdichtungsformung verzichtet werden und ein relativ viele Luftporen enthaltendes Formteil dadurch erzielt werden, das die in oben stehendem Verfahren erhaltene Mischung lediglich eingerüttelt und einem kalibrierendem Leichtpressen unterzogen wird.

Nach einer weiteren Ausgestaltung wird im Falle sehr dünnschaliger Baustoff-Formteile der dritte Verfahrensschritt substituiert. Dazu wird das trockene Feststoffpartikelgemisch auf ein zuvor mit einem entsprechenden Wasserfilm beaufschlagten Formband gerieselt. Aufgrund der entstehenden Kapillaren des Feststoffhaufwerkes wird das Wasser teils aufgesogen, ohne die nahezu ideale Mischung zu entmischen und beim späteren Formpressen endgültig homogen verteilt.

Das gemäß dem erfindungsgemäßen Verfahren hergestellte Baustoff-Formteil weist erfahrungsgemäß vorzügliche mechanische Eigenschaften auf, die denjenigen von Asbest-Baustoff-Formteilen sehr nahe kommen. Die Tragfähigkeit entspricht beispielsweise 3/4 des Wertes von hochbelastungsfähigen Asbestfaser-Zementplatten.

Die in der vorstehenden Beschreibung, den Ansprüchen und der Zeichnungen zum Ausdruck kommenden Merkmale der Erfindung können sowohl einzeln als auch in beliebiger Kombination für die Verwirklichung der Erfindung wesentlich sein.

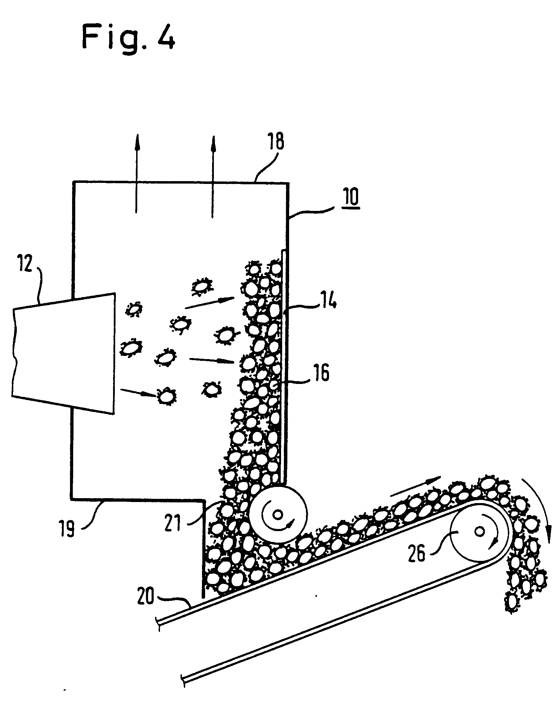

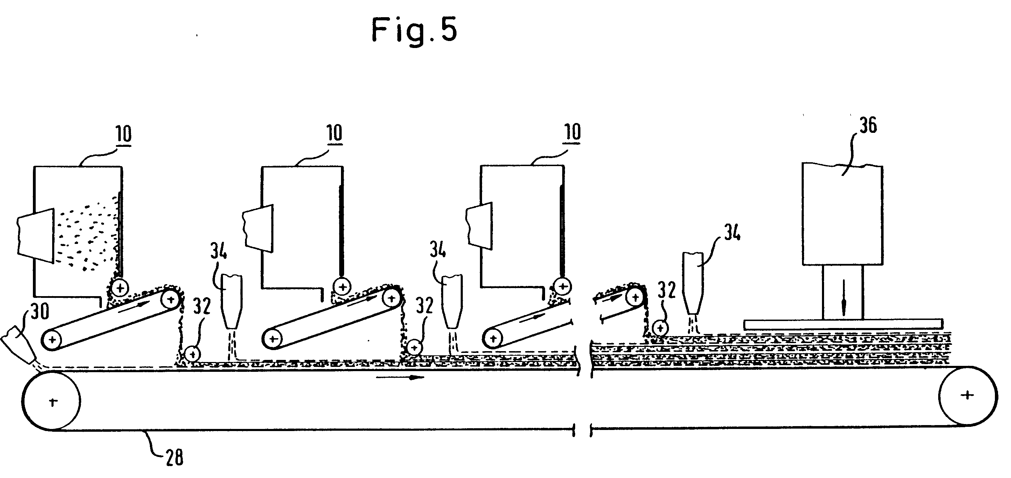

In den Figuren 4 und 5 ist für ein weiteres Verfahren ein Schema zur Herstellung asbestfreier Baustoff-Formteile dargestellt.

Eine Dosiervorrichtung 10 für das Feststoffpartikelgemisch 16 weist gemäß Figur 4 eine horizontal schwenkbare Auslaßvorrichtung 12 des pneumatisch/mechanisch arbeitenden Mischorganes auf, aus dem das quasihomogene Feststoffpartikelgemisch 16 durch einen pneumatischen Transportvorgang entmischungsfrei ausgeblasen und in einem Gehäuse 18 mit einer der Auslaßvorrichtung 12 gegenüber angeordneten Prallplatte 14 aufgefangen wird. Auf dieser Prallplatte 14 baut sich durch die pneumatische Partikelzuführung im Falle nach oben ermöglichtem Abzug von Transportüberschußluft ein sehr dicht gelagertes Partikelpolster auf. Bei Vorhandensein eines Schlitzes 21 in der Gehäusebodenplatte 19 kann das verdichtete Partikelgemisch in Abhängigkeit von der Größe dieses Schlitzes 21 und der Geschwindigkeit eines darunter laufenden Transportbandes 20 auf letzterem dosiert abgelegt werden. Eine Andruckrolle 22 vergleichmäßigt die Schichtdicke des auf dem Transportband 20 abgelegten Partikelgemischs. Am Ende des Transportbands 26 fällt die leicht vorverdichtete Feststoffpartikelschicht im wesentlichen ohne Entmischung und zeiteinheitsdosiert auf ein Formband 20.

In Figur 5 sind mehrere Feststoffpartikelgemisch-Dosiervorrichtungen 10 entlang eines Formbandes 28 angeordnet. Dadurch kann ein Baustoff-Formteil bestimmter Dicke in vorteilhafter Weise in mehreren Schichten aufgebaut werden. Dazu wird mittels einer Sprüh- oder Schleierbenetzungseinrichtung 30 zunächst ein dickendosierter Wasserfilm auf dem Formband 28 abgelegt. In diesem dünnen Wasserfilm wird aus einer ersten Dosiervorrichtung 10 eine der Wassermernge in diesem Wasserfilm zuzuordnende Feststoffpartikelschicht dosierter Dicke aufgerieselt, die anschließend durch eine Andruckwalze 32 in der Dicke vergleichmäßigt und leicht vorverdichtet wird. Mittels einer regelbaren Schleierbenetzungsvorrichtung 34 wird anschließend ein dünner, beim Auftreffen auf die Feststoffpartikelschicht noch nicht aufgerissener Wasserfilm so schonend bei entsprechend aufeinander abgestimmten Wasserschleierfallgeschwindigkeiten und Formbandtransportgeschwindigkeiten auf die Feststoffpartikelschicht quasi wie eine Folienhaut aufgelegt, daß beim anschließenden Aufsaugvorgang keine oder nur unwesentliche Oberflächenpartikelumlagerungen stattfinden. Die Regelmäßigkeit eines unverletzten Wasserschleiers zwischen dem Wasserschleieraustritt und der auf dem Formband 28 aufliegenden Feststoffpartikelschicht kann z.B. durch Zugabe von Tensiden in der erforderlichen Dosierung erreicht werden. Gleichzeitig lassen sich über den Wasserschleier auch flüssige Abbindezeitsteuersubstanzen für die jeweils benötigte Dosierungspaarung von Bindemittelpartikeln und Hydratationswasser einbringen. Nun werden die zuvor beschriebenen Verfahrensschritte solange wiederholt, bis die gewünschte Zahl der Feststoffpartikelschicht-/Wasserfilm-Paarungen aufeinandergelegt ist. Danach kann das Baustoff-Formteil mit bekannten, hier nicht dargestellten Zuführungstechniken unter eine Formteilpresse 36 gebracht und je nach gewünschtem Verdichtungsgrad mit den dafür erforderlichen Preßdrücken zumindest bis hin zu einer quasi-luftporenfreien Feuchtverdichtung ausgeformt werden.

**Patentansprüche**

**1.** Baustoff-Formteil aus einem asbestfreien Stoffgemisch, das Hydratationsbindemittel (B), z.B. Zement (Z), Wasser (W) für deren Hydratation, Faserbewehrungsstoffe, die neben die Hydratation des Bindemittels nicht störenden Füllstoffen im wesentlichen Cellulosefasern (C-Fasern) enthalten, und mit Ca-$(OH)_2$-Kristallen puzzolanisch reagierende EFA-Feinstglaskügelchen (E) enthält, dadurch **gekennzeichnet**, daß im mischfertigen Faserhaufwerk der in schmalbandiger Verteilung vorliegende Durchmesser $D_C$ der luftrockenen bzw. der Durchmesser $D_{Cq}$ der naßfeucht gequollenen C-Einzelfasern im Bereich von

40 $\mu$m < $D_C$<110 $\mu$m
bzw. 50 $\mu$m < $D_{Cq}$<135 $\mu$m

EP 0 178 308 B1

liegt und das Verhältnis von $D_C$ bzw. $D_{Cq}$ zu der in einem engen Bereich eingestellen Mahlkörnung $D_o$ der Bindemittelpartikel im Bereich von

0,9 <$D_C$/$D_o$<1,1 bzw.
1,1 <$D_{Cq}$/$D_o$<1`35

liegt.

**2.** Baustoff-Formteil nach Anspruch 1, dadurch **gekennzeichnet,** daß die Feinstglaskügelchen (E) EFA-Großkugeln ($E_G$), EFA-Mittelkugeln ($E_M$) und EFA-Kleinkugeln ($E_K$) in Mengenanteilen der EFA-Gesamt-menge von

15 Mengen % $E_G$
35 Mengen % $E_M$
50 Mengen % $E_K$

enthalten und Durchmesserverteilungen von
40 $\mu$m <$D_{EG}$≤90 $\mu$m; $D_{EG}$≈Do
10 $\mu$m <$D_{EM}$≤40 $\mu$m
$D_{EK}$<10 $\mu$m

aufweisen.

**3.** Baustoff-Formteil nach Anspruch 1 oder 2 **dadurch gekennzeichnet**, daß die aus Z- und E-Partikeln zusammengesetzte Anteilmenge der resultierenden Z-bezogenen Bindemittelpartikel (B-Partikel) in Gewichten $G_Z$ + $G_E$ = $G_B$ ausgedrückt, im Verhältnisbereich

0,16 ≤ $G_E$/$G_Z$ ≤ 0,20 ($G_E$/$G_Z$ ≈ 0,18 i. Mittel)
bzw. 0,14 < $G_E$/$G_B$ < 0,17 ($G_E$/$G_B$ ≈ 0,15 i. Mittel)

liegt.

**4.** Baustoff-Formteil nach Anspruch 1 oder Ansprüchen 1 bis 3, **dadurch gekennzeichnet,**
daß die Platte nach dem Formpressen weniger Gewichtsanteile Wasser pro Gewichtanteil Zement enthält als 0,375, sofern keine Kapillarporen auftreten dürfen, und weniger als 0,45, sofern bis zu 15 % des Bindemittelsteinvolumens von Kapillarporen eingenommen werden darf, wobei zusätzlich 0,12 Gewichtsanteile Wasser pro zugefügter Gewichtsanteil EFA-Zusatz vorhanden sein dürfen.

**5.** Baustoff-Formteil nach Ansprüchen 1 und 4 oder Ansprüchen 1 bis 4, **dadurch gekennzeichnet,**
daß der Füllfaktor $f_C$ bzw. $f_{Cq}$ bei massedichter Lagerung

$$0,27 < f_C < 0,32 \quad \text{für } 0,9 < \frac{D_C}{D_o} < 1,1$$

bzw.

$$0,38 < f_{Cq} < 0,45 \quad \text{für } 1,1 < \frac{D_{Cq}}{D_o} < 1,35$$

beträgt.

**6.** Baustoff-Formteil nach Ansprüchen 1 und 5 oder Ansprüchen 1 bis 5, **dadurch gekennzeichnet**,
daß als zusätzliche Faserbewehrung weitgehend alkaliresistente Glasfasern vorgesehen sind, deren Durchmesserverteilung $D_G$ der G-Einzelfasern bezogen auf die Korngrößenverteilung $D_o$ der B-Partikeln

23

bzw. bezogen auf die Durchmesserverteilung $D_C$ der C-Fasern die gleiche Schmalbandigkeit und innerhalb dieser die Relation

$0,175 < D_G/D_o < 0,195$
bzw. $0,16 < D_G/D_C < 0,22$
erfüllt, wobei der Füllfaktor der Glasfasern einen Wert von etwa $f = 0,05$ annimmt und die Summe der Füllfaktoren $f_C$ und $f_G$ bzw. $f_{Cq}$ und $f_G$

$$0,27 < f_C + f_G < 0,32 \text{ für } 0,9 < \frac{D_C}{D_o} < 1,1$$

bzw.

$$0,38 < f_{Cq} + f_G < 0,45 \text{ für } 1,1 < \frac{D_{Cq}}{D_o} < 1,35$$

beträgt.

**7.** Verfahren zum Herstellen eines Baustoff-Formteiles gemäß einem oder mehreren der vorhergehenden Ansprüche, **gekennzeichnet dadurch**
folgende Schritte:
a) Faserbewehrungsstoffe mit hohen Cellulosefaseranteilen in einem Aufschlußzustand und mit Durchmessern gemäß Anspruch 1 werden einer pneumatisch/mechanischen Zwangsmischung mit Bindemittelpartikeln mit einer Korngrößenverteilung gemäß Anspruch 1 und EFA-Feinstglaskügelchen gemäß Anspruch 2 in einem Gewichtsverhältnis gemäß Anspruch 3 unterzogen, bis eine homogene Gleichverteilung aller Komponenten erreicht ist;
b) das gemäß a) erzeugte verteilungshomogene Gemisch wird durch Entzug der lediglich durch pneumatische Misch- und Transportvorgänge auftretenden Überschußluft auf eine möglichst dichte Partikellagerungskonzentration gebracht.
c) das gem. a) und b) erzeugte, verteilungshomogene Gemisch, das aufbereitungsbedingt bereits Depotwasser in teilgequollenen Cellulosefasern enthalten kann, wird in einer schwachturbulenten, Partikelausspülungen vermeidenden pneumatisch/mechanischen Schwebestrom-/Wälzmischung mit Wassernebel zumindest in einer Menge beaufschlagt, daß sich unter Anrechnung der schon vorhandenen Cellulosefaser Depotwassermenge nach Abschluß dieses Mischvorgangs die Wasser-/Bindemittelgewichtsverhältnisse gem.Anspruch 4 in der anschließenden Riesel-, Rüttel- und Preßformung einstellen lassen, wobei der Feuchtegrad der Mischung höchstens so hoch ansteigt, daß immer noch eine Rieselbeschickung der jeweiligen Formungsanlage ohne Mischungsdehomogenisierungsgefahr möglich ist;
d) das formungsfertige Stoffgemisch wird mit bekannten Verfahren der Schütt- bzw. richtungsorientierten Lagenrieseltechnik (z.B. für Baustoffplatten) vorgeformt und je nach gewünschter Baustoffverwendung
e) entweder massedicht gepreßt
f) oder gerüttelt und nur kalibrierend unter Zulassung von Mischgefügehohlräumen leichtgepreßt.

**8.** Verfahren nach Anspruch 7,
**dadurch gekennzeichnet**,
daß in Schritt 7 c) dem als Wassernebel zuzuführenden Restwasser vor oder bei dessen Zerstäubung die Oberflächenspannung des Wassers herabsetzende Verflüssiger oder chemische Zusatzstoffe beigegeben werden, die die Hydratation des Bindemittels nicht stören.

**9.** Verfahren nach Anspruch 7 oder Anspruch 7 und 8,
**dadurch gekennzeichnet**,
daß im Verfahrensschritt 7 c) heißer Wasserdampf statt umgebungstemperiertem Wasserzerstäubungsnebel eingetragen wird.

**10.** Verfahren nach Anspruch 7,
   **dadurch gekennzeichnet**,
   daß der Verfahrensschritt 7 c) entfällt und das noch nicht zwangsbefeuchtete Feststoffpartikelgemisch in einen Wasserfilm, der zuvor auf ein Formband aufgebracht wurde, hineingerieselt wird.

**11.** Verfahren nach Anspruch 7 und/oder einem der folgenden Ansprüche,
   **dadurch gekennzeichnet**,
   daß das verteilungshomogene Feststoffgemisch nach Beendigung des Verfahrensschrittes 7 a) durch einen pneumatischen Transportvorgang über ein Wehr geleitet wird, an dem die überschüssige Transportluft nach vorne und oben entweichen kann.

**12.** Verfahren nach Anspruch 7 und/oder einem der folgenden Ansprüche,
   **dadurch gekennzeichnet**,
   daß eine Zugabe von Glasfasern in den Abmessungsverhältnissen und mit einem Füllfaktor nach Anspruch 6 im Verfahrensschritt 7 a), d.h. während der pneumatisch/mechanischen Zwangsmischung, erfolgt.

**13.** Baustoff-Formteil nach Anspruch 1 und/oder einem der folgenden Ansprüche,
   **dadurch gekennzeichnet**,
   daß im Hydratationsbindemittel Gips als Zusatz oder auch alleine Anwendung findet.

**14.** Verfahren nach Anspruch 7,
   **dadurch gekennzeichnet**,
   daß anstatt der Verfahrensschritte 7b), c) und d) das verteilungshomogene Gemisch im Falle etwa anschließender Formatwalzenaufwicklung des Stoffgemisches über eine, im Falle einer Mehrschichtenrieselformung über so viele hintereinandergeschaltete Dosiervorrichtungen (10), wie der Zahl der gewünschten Schichten entspricht, auf einem Formband (28) derart abgelegt wird, daß ein erster Partikelvolumenstrom in einen zuvor auf das Formband (28) aufgebrachten Wasserfilm herabrieselt, anschließend wahlweise durch eine Andruckwalze (32) vergleichmäßigt und wiederum von einem Wasserfilm überzogen wird, bevor sich diese Verfahrensfolge wiederholt.

**15.** Verfahren nach Anspruch 14,
   **dadurch gekennzeichnet**,
   daß das auf das Formband (28) aufgebrachte Wasser mit Tensiden und Bindemittelabbindezeit einstellenden Stoffen versetzt ist.

**16.** Vorrichtung zur Durchführung des Verfahrens
   **dadurch gekennzeichnet**,
   daß die Dosiervorrichtung (10) aus einer horizontal schwenkbaren Auslaßvorrichtung (12) des pneumatisch/mechanischen Mischorganes und einem Gehäuse (18) mit einer der Auslaßvorrichtung (12) gegenüber angeordneten Prallplatte (14) besteht, auf der sich durch die pneumatische Partikelzuführung und im Falle nach oben ermöglichtem Abzug von Transportüberschußluft ein sehr dicht gelagertes Partikelpolster bildet, aus dem bei Vorhandensein eines Schlitzes (21) in der Gehäusebodenplatte (19) das verdichtete Partikelgemisch in Abhängigkeit von der Größe dieses Schlitzes (21) und der Geschwindigkeit eines darunter laufenden Transportbandes (20) auf letzterem dosiert abgelegt werden kann.

**Claims**

**1.** A building material part made of an asbestos-free material mixture comprising hydration binders (B), such as cement (Z), water (W) for the hydration thereof, fiber reinforcing materials which in addition to fillers non-detrimental for binder hydration substantially contain cellulose fibers (C-fibers), and very fine glass spheres (E) (EFA-filler) which show a puzzolana reaction with $Ca(OH)_2$ crystals,
   characterized in that
   the narrow-band distributions of diameter $D_C$ of the air-dry resp. $D_{Cq}$ of the wet-moist swollen single C-fibers in the ready-for-mixture fiber debris lies in the range of

   $$40 \, \mu m < D_C < 110 \, \mu m$$

or 50 $\mu$m < $D_{Cq}$ < 135 $\mu$m,

and the ratio between $D_C$ or $D_{Cq}$ and the grain $D_o$, adjusted in a narrow range, of the binder particles, lies in the range of

0,9 < $D_C/D_0$ < 1,1
or 1,1 < $D_{Cq}/D_0$ < 1,35.

2. The building material part according to claim 1, characterized in that the very fine glass spheres (E) (EFA-filler (E)), contain EFA-large spheres ($E_G$),EFA-medium spheres ($E_M$) and EFA-small spheres ($E_K$) participating by quantity proportions in the EFA-total amount of:

about 15 quantity % of $E_G$;
about 35 quantity % of $E_M$;
about 50 quantity % of $E_K$;

and having a diameter distribution of:

40 $\mu$m < $D_{EG}$ ≦ 90 $\mu$m; $D_{EG}$ ≈ $D_0$
10 $\mu$m < $D_{EM}$ ≦ 40 $\mu$m
$D_{EK}$ ≦ 10 $\mu$m.

3. The building material part according to either claim 1 or 2,
characterized in that
the quantity proportion of the resultant Z-referring binder particles (B-particles), which is composed of Z-and E-particles, lies approximately within the range of ratio, expressed by weights $G_Z$ + $G_E$ = $G_B$

0,16 ≦ $G_E/G_Z$ ≦ 0,20 ($G_E/G_Z$ ≈ 0,18 on an average)
resp. 0 14 ≦ $G_E/G_B$ ≦ 0,17 ($G_E/G_B$ ≈ 0,15 on an average).

4. The building material part according to claim 1 or claim 1 through 3,
characterized in that after form-pressing, the plate contains less than 0,375 weight parts of water per weight parts of cement, to the extent that no capillary pores must occur, and less than 0,45 to the extent that up to 15 % of the binder volume can be occupied by capillary pores, wherein 0,12 weight parts of water can be additionally present per added weight part of EFA-addition.

5. The building material part according to claims 1 and 4, or claims 1 through 4,
characterized in that
for dense-packed disposition, the filling factor $f_C$ resp. $f_{Cg}$ is in the range of 0,27 < $f_c$ < 0,32

$$\text{for} \quad 0,9 < \frac{D_C}{D_0} < 1,1$$
$$\text{resp.} \quad 0,387 < f_{Cg} < 0,45$$
$$\text{for} \quad 1,1 < \frac{D_{Cg}}{D_0} < 1,35.$$

6. The building material part according to claims 1 and 5 or claims 1 through 5,
characterized in that
as an additional fiber reinforcement largely alkali-resistant glass fibers are provided, whose diameter distribution $D_G$ of the single G-fibers, based on the grain size distribution $D_0$ of the B-particles resp. based on the diameter distribution $D_C$ of the C-fibers has the same narrow band type and fulfils within these the relation

resp. 0,175 < $D_G/D_0$ < 0,195
resp. 0,16 < $D_G/G_C$ < 0,22

the filling factor of the glass fibers taking a value of about $f_C = 0,05$, and the sum of the filling factors $f_C$ and $f_G$ resp. $f_{Cg}$ and $f_G$ being within the ranges:

$$0,27 < f_C + f_G < 0,32$$

$$\text{for } 0,9 < \frac{D_C}{D_0} < 1,1$$

$$\text{resp. } 0,38 < f_{Cg} + f_G < 0,45$$

$$\text{for } 1,1 < \frac{D_{Cg}}{D_0} < 1,35.$$

7. A method of making a building material part according to one or several of the preceding claims, characterized by the following steps:

a) fiber reinforcing materials having high proportions of cellulose fibers in a state of distribution of particle size according to claim 1 are subjected to a mechano-pneumatic compulsory mixture with binder particles having a grain size distribution according to claim 1, and EFA-particles according to claim 2 in a weight ratio according to claim 3 till a homogeneous uniform distribution of all components is achieved;

b) the distribution-homogeneous mixture produced according to a) is brought to the densest possible concentration of particle disposition by withdrawing the resultant surplus air merely by pneumatic mixing and transporting procedures;

c) the distribution-homogeneous mixture of fiber reinforcing materials and binder particles as produced according to a) and b) and having possibly deposit water proportions already present due to preparation in the partly swollen cellulose fiber constituents is subjected to a weakly turbulent mechano-pneumatic suspending stream/rolling mixing with mist which avoids the flushing of particles in at least such an amount that by taking into account the C-fiber deposit water quantities already present upon termination of said mixing procedure the ratios of water/binder weight according to claim 4 can be adjusted in the course of a successive trickling, joggling and press forming, and the degree of moistness of the mixture rising at the most so high that a trickling charging of the respective forming assembly is still possible without any danger of dehomogenizing the mixture;

d) by known methods of the discharging resp. direction-oriented trickling-in-layers technique (e.g. for building material plates) the material mixture ready for forming (acc. to c)) is pre-formed and, dependent upon the desired utilization of building material.

e) either compressed in its dense-packed form

f) or joggled and slightly compressed only in a calibrating mode by allowing cavities resultant owing to the mixture.

8. The method according to claim 17,
characterized in that
in step 7 c) liquefiers or chemical additives are added to the remaining water to be fed as a water mist prior to or at the atomization thereof, which liquefiers or additives reduce the surface tension of water and are non-detrimental to binder hydration.

**9.** The method according to claim 7 or claim 7 and 8,
characterized in that
in method step 7c) hot steam is introduced in place of room temperature water-atomization mists.

**10.** The method according to claim 7,
characterized in that
method step 7 c) is dropped and the mixture of solid material particles not compulsorily wetted yet is trickled into a water film previously applied onto a forming belt.

**11.** The method according to claim 7 and/or any of the following claims,
characterized in that
after termination of method step 7 a), the distribution-homogeneous solid material mixture is led by a pneumatic transporting procedure over a weir, where the surplus transport air can escape in the forward and upward direction.

**12.** The method according to claim 7 and/or any of the following claims,
characterized in that
an addition of glass fibers according to the dimensioning ratios and with a filling factor according to claim 6 is carried out in method step 7 a), i.e. during the mechano-pneumatic compulsory mixing.

**13.** Building material part according to claim 1 and/or any of the following claims,
characterized in that
in the hydration binder gypsum is used as an additive or even alone.

**14.** The method according to 7,
characterized in
that in place of method steps 7 b), c) and d) the distribution-homogeneous mixture, in case of e.g. a successive winding-up by a format roll of the material mixture, is deposited on a forming belt (28) via one dosing means or via as many subsequented dosing means (10) as corresponding to the number of the desired layers in case of a multi-layer trickling formation, such that a first stream of particle volume trickles down onto a water film previously coated upon the forming belt (28), subsequently and optionally is rendered more uniform by a pressing roll (32) and coated again by a water film, before the said sequence of process is repeated.

**15.** The method according to 14,
characterized in that
the water applied onto said forming belt (28) is mixed with tensides and substances regulating the binder setting time.

**16.** Apparatus for carrying out the method,
characterized in that
said dosage means (10) consists of a horizontally swingable outlet means (12) of the mechano-pneumatic mixing organ and a housing (18) having a baffle plate (14) which is disposed oppositely to said outlet means (12) and on which, in case of the draw-off of transport surplus air in the upward direction, a very densely deposited particle cushion is forming by the pneumatic particle supply, from which cushion the packed particle mixture, if there is any slot (21) in the housing bottom plate (19), can be deposited on a transport belt (20) running under said slot in a dosed mode, dependent on the size of said slot (21) and on the speed of said transport belt running thereunder.

**Revendications**

**1.** Partie de matériau de construction en mélange de matériaux sans amiante, comprenant des liants d'hydratation (B) tels que du ciment (Z), de l'eau pour l'hydratation de ceux-ci, des matériaux de renfort en fibres qui, en plus de matières de charge qui ne nuisent pas à l'hydratation du liant, comprennent essentiellement des fibres de cellulose (fibres C), et des sphères de verre très fines (E) (charge EFA) qui présentent une réaction de pouzzolane avec des cristaux de $Ca(OH)_2$, caractérisée en ce que dans la masse du mélange fini de fibres la distribution en bande étroite du diamètre $D_C$ des fibres C individuelles gonflées séchées à l'air, ou du diamètre $D_{Cq}$ des fibres individuelles gonflées humides

28

mouillées est située dans la plage de:

40 $\mu$m < $D_C$ < 110 $\mu$m
ou 50 $\mu$m < $D_{Cq}$ < 135 $\mu$m,

et le rapport entre $D_C$ ou $D_{Cq}$ et le grain $D_0$, ajusté dans une plage étroite, des particules de liant, est situé dans la plage de:

0,9 < $D_C/D_0$ < 1,1
ou 1,1 < $D_{Cq}/D_0$ < 1,35.

2. Partie de matériau de construction selon la revendication 1, caractérisée en ce que les sphères de verre très fines (E) (charge EFA) comprennent des sphères EFA de grande taille ($E_G$), des sphères EFA de taille moyenne ($E_M$) et des sphères EFA de petite taille ($E_K$) en proportion quantitatives dans la quantité totale de EFA de:

environ 15 % de $E_G$,
environ 35 % de $E_M$;
environ 50 % de $E_K$;

et présentent une distribution de diamètre de:

40 $\mu$m < $D_{EG}$ ≤ 90 $\mu$m; $D_{EG}$ ≈ $D_0$
10 $\mu$m < $D_{EM}$ ≤ 40 $\mu$m
$D_{EK}$ ≤ 10 $\mu$m.

3. Partie de matériau de construction selon l'une ou l'autre des revendications 1 et 2, caractérisée en ce que la proportion quantitative des particules de liant (particules B) rapportées à Z, qui est composée de particules Z et E, est située dans la plage de proportions:

0,16 ≤ $G_E/G_Z$ ≤ 0 20 ($G_E/G_Z$ ≈ 0,18 en moyenne)
ou 0,14 ≤ $G_E/G_B$ ≤ 0,17 ($G_E/G_B$ ≈ 0,15 en moyenne).

4. Partie de matériau de construction selon la revendication 1 ou selon les revendications 1 à 3, caractérisée en ce qu'après formage à la presse, la plaque contient moins de 0,375 parties en poids d'eau par partie en poids de ciment, dans la mesure où aucun pore capillaire ne doit se produire, et moins de 0,45 dans la mesure où au plus 15 % du volume du liant peut être occupé par des pores capillaires, et 0,12 parties en poids d'eau peuvent être additionnellement présentes par partie en poids de EFA additionnelle.

5. Partie de matériau de construction selon les revendications 1 et 4 ou selon les revendications 1 à 4, caractérisée en ce que pour une disposition en masse compacte, le coefficient de remplissage $f_C$ ou $f_Cq$ est égal à

0,27 < $f_C$ < 0,32 pour 0,9 < $D_C / D_0$ < 1,1

ou

0,38 < $f_Cq$ < 0,45 pour 1,1 < $D_Cq / D_0$ < 1,35.

6. Partie de matériau de construction selon les revendications 1 et 5 ou selon les revendications 1 à 5, caractérisée en ce qu'il est prévu en tant que renfort additionnel des fibres des fibres de verre largement résistantes aux alcalis, dont la distribution du diamètre $D_G$ des fibres individuelles G, basée sur la distribution de la taille de grain $D_0$ des particules B, ou basée sur la distribution du diamètre $D_C$ des fibres C, présente le même type à bande étroite et y satisfait la relation:

0,175 < $D_G/D_0$ < 0,195
ou 0,16 < $D_G/D_C$ < 0,22

le coefficient de remplissage des fibres de verre de remplissage prenant une valeur d'environ $f_C = 0,05$, et la somme des coefficients de remplissage $f_C$ et $f_G$ ou $f_{Cg}$ et $f_G$ étant située dans les plages:

$$0,27 < f_C + f_G < 0,32$$

$$\text{pour } 0,9 < \frac{D_C}{D_0} < 1,1$$

$$\text{ou } 0,38 < f_{Cg} + f_G < 0,45$$

$$\text{pour } 1,1 < \frac{D_{Cg}}{D_0} < 1,35.$$

**7.** Procédé de fabrication d'une partie de matériau de construction selon l'une quelconque des revendications précédentes, caractérisé par les étapes suivantes:

a) on soumet des matériaux de renfort fibreux présentant de fortes proportions de fibres de cellulose dans un état de distribution de taille de particules suivant la revendication 1 à un mélange forcé mécanique-pneumatique avec des particules de liant présentant une distribution de taille de grain suivant la revendication 1 et des particules EFA suivant la revendication 2 dans un rapport de poids suivant la revendication 3 jusqu'à réaliser une distribution uniforme homogène de tous les composants;

b) on amène le mélange à distribution homogène produit dans l'étape a) à la concentration la plus dense possible de disposition de particules en chassant l'air résultant en excès simplement au moyen de procédures de mélange et de transport;

c) le mélange à distribution homogène de matériaux de renfort fibreux et de particules de liant tel que produit par les étapes a) et b) et qui inclut éventuellement, en raison de la préparation, des proportions d'eau de dépôt déjà présentes dans les composants de fibres de cellulose partiellement gonflées est soumis à un mélange faiblement turbulent mécanique-pneumatique, à écoulement oscillant et roulement tout en évitant le lessivage des particules, avec un brouillard d'eau au moins dans une quantité telle qu'en tenant compte des quantités d'eau de dépôt déjà présentes dans les fibres de cellulose, on peut ajuster après terminaison de cette procédure de mélange les proportions en poids d'eau et de liant suivant la revendication 4 au cours d'un formage ultérieur par écoulement, secouage et pressage, et le degré d'humidité du mélange augmentant au maximum de telle manière qu'un remplissage par écoulement de l'unité de formage soit encore possible sans risquer de déshomogénéiser le mélange;

d) par des procédés connus des techniques d'écoulement en couches par décharge ou par orientation directionnelle (p.ex. pour des plaques de matériaux de construction) on préforme le mélange de matériaux prêt au formage et, selon le type d'utilisation désiré

e) soit on le comprime en forme dense compacte

f) soit on le secoue et on le comprime légèrement en mode de calibrage en autorisant des cavités incluses dans le mélange.

**8.** Procédé selon la revendication 7, caractérisé en ce que à l'étape c) on ajoute des liquéfiants ou des additifs chimiques au reste d'eau qui doit être admis sous forme de brouillard d'eau avant ou au cours de son atomisation, lesdits liquéfiants ou additifs réduisant la tension superficielle de l'eau et ne nuisant pas à l'hydratation du liant.

**9.** Procédé selon la revendication 7 ou selon les revendications 7 et 8, caractérisé en ce qu'on introduit de la vapeur d'eau chaude au cours de l'étape 7c) à la place d'un brouillard d'eau à la température ambiante.

**10.** Procédé selon la revendication 7, caractérisé en ce que l'on omet l'étape 7c) et le mélange le mélange de particules de matériaux solides qui n'est pas encore obligatoirement mouillé est versé dans un film d'eau qui a été préalablement appliqué sur une bande de formage.

**11.** Procédé selon la revendication 7 et/ou selon l'une quelconque des revendications suivantes, caractérisé en ce que, après terminaison de l'étape 7a), le mélange de matériaux solides à distribution homogène est conduit par une procédure de transport pneumatique au-dessus d'un barrage où l'air de transport en excès peut s'échapper vers l'avant et vers le haut.

**12.** Procédé selon la revendication 7 et/ou selon l'une quelconque des revendications suivantes, caractérisé en ce qu'on effectue au cours de l'étape 7a), c.à.d. pendant le mélange forcé mécanique-pneumatique, une addition de fibres de verre ayant les rapports dimensionnels et dans un coefficient de remplissage suivant la revendication 6.

**13.** Partie de matériau de construction selon la revendication 1 et/ou selon l'une quelconque des revendications suivantes, caractérisée en ce qu'on utilise du plâtre dans le liant d'hydratation, en tant qu'additif ou même seul.

**14.** Procédé selon la revendication 7, caractérisé en ce que, à la place des étapes 7b), c) et d), on dépose le mélange à distribution homogène, p.ex. dans le cas d'un enroulement suivant du mélange de matériaux au moyen d'un rouleau de formatage, sur une bande de formage (28) au moyen d'un dispositif de dosage, ou au moyen d'autant de dispositifs de dosage successifs (10) que correspondant au nombre de couches que l'on désire dans le cas d'une formation par écoulement multi-couche, de telle sorte qu'un premier courant de volume de particules s'écoule vers le bas sur un film d'eau préalablement appliqué sur la bande de formage (28), ce courant de particules étant ensuite en option rendu plus uniforme au moyen d'un rouleau de pressage (32) et à nouveau recouvert d'un film d'eau, avant que ladite séquence du procédé ne soit répétée.

**15.** Procédé selon la revendication 14, caractérisé en ce que l'eau appliquée sur ladite bande de formage (28) est mélangée avec des agents tensio-actifs et des substances régulant le temps de prise du liant.

**16.** Appareil pour la mise en oeuvre du procédé, caractérisé en ce que ledit dispositif de dosage (10) comprend un organe de sortie (12), qui peut être basculé horizontalement, des moyens de mélange mécaniques-pneumatiques et un boîtier (18) doté d'une plaque d'impact (14) qui est disposée à l'opposé de l'organe de sortie (12) et sur laquelle se forme, dans le cas où l'air de transport en excès s'échappe vers le haut, un coussin de particules déposées de manière très dense par l'alimentation pneumatique des particules, coussin à partir duquel le mélange de particules compactées peut être déposé, s'il est prévu une fente (21) dans la plaque de fond (19) du boitier, sur une bande de transport (20) qui court au-dessous de cette fente dans un mode de dosage, en fonction de la taille de cette fente (21) et de la vitesse de la bande de transport qui court au-dessous d'elle.

FIG. 1

FIG. 2

# FIG. 3

## Fig. 4

# Fig.5